# EUROPEAN PATENT APPLICATION

(11) **EP 2 923 795 A1**
(43) Date of publication of application: **30.09.2015**
(21) Application number: 15159818.2
(22) Date of filing: 19.03.2015
(51) Int. Cl.: B23Q 3/154, H01F 7/20

(54) **MAGNETIC SUBSTANCE HOLDING DEVICE MINIMALIZING RESIDUAL MAGNETISM**

(30) Priority: 26.03.2014 KR 20140035542
(71) Applicant: Choi, Tae Kwang, Gyeonggi-do 423-050 (KR)
(72) Inventor: Choi, Tae Kwang, Gyeonggi-do 423-050 (KR)
(74) Representative: Fabry, Bernd

(57) **Abstract**

Disclosed herein is a magnetic substance holding device that characterized by comprising: a base; a first pole piece having a holding face; a second pole piece having a holding face, being movable between a first and a second location; a primary permanent magnet;a coil wound around at least one of the first and the second pole piece; and a control device. The control device applies current to the coil to magnetize at least one of the first pole piece and the second pole piece to thereby control the second pole piece to be at the first location at the time of holding the workpiece so that the holding face of the second pole piece comes in contact with the workpiece, and the second pole piece to be at the second location at the time of detaching the workpiece so that the holding face of the second pole piece is spaced apart from the workpiece.

## Description

### BACKGROUND OF THE INVENTION

### Field of the Invention

The present invention relates to a magnetic substance holding device, and more particularly to a magnetic substance holding device that minimizes residual magnetism by way of employing a gap and structures for minimizing reluctance to magnetic flux flow.

### Description of the Related Art

A magnetic substance holding device such as a permanent magnet workholding device is used to attach thereto a workpiece made of a magnetic material such as iron using magnetic force. Nowadays, such a magnetic substance holding device is widely used as an internal device attached to a mold clamping unit of an injection molding machine, a mold clamping unit of a press machine, a chuck of a machine tool, and so on.

The basic principle of such a magnetic substance holding device is that it attaches a magnetic workpiece to a holding face using strong magnetic force from a permanent magnet, and detaches the magnetic workpiece from the holding face by controlling the magnetic flux from the permanent magnet so that no magnetic flux flows through the holding face.

The method for controlling the magnetic flux from the permanent magnet may include rotating another permanent magnet which is rotatably installed to control the magnetic flux, employing an additional electromagnet to control the magnet flux, or the like.

The applicant of the present invention has already proposed a magnetic substance holding device employing an additional electromagnet (see International Publication No. WO 2012/039548). In addition, the applicant of the present invention has proposed an improved magnetic substance holding device (see Korean Patent No. 1319052).

The magnetic substance holding device disclosed in the Korean Patent No. 1319052 to the applicant of the present invention includes coils around pole pieces instead of an additional electromagnet, and accordingly has advantages in that strong holding force can be obtained in a simple structure, magnetic force from a permanent magnet can be controlled with small current at the time of switching between holding and detaching, and strong holding force can be obtained in a smaller space.

However, there is still a challenge for such a magnet substance holding device to minimize residual magnetism that attracts a workpiece even after it is detached. The magnetic substance holding devices disclosed in the above references could have reduced residual magnetism, compared to existing magnetic substance holding devices. However, in order to increase utilization of such magnetic substance holding devices, residual magnetism has to be further reduced.

### SUMMARY OF THE INVENTION

In view of the above, an object of the present invention is to provide a magnetic substance holding device that minimizes residual magnetism by way of employing a gap and structures for minimizing reluctance to magnetic flux flow.

It should be noted that objects of the present invention are not limited to the above-described object, and other objects of the present invention will be apparent to those skilled in the art from the following descriptions.

According to an aspect of the present invention, there is provided a magnetic substance holding device that holds a workpiece thereon and detaches it therefrom. The magnetic substance holding device includes: a base being a magnetic substance; a first pole piece having a holding face on which the workpiece is attached, the first pole piece being in contact with the base and being a magnetic substance; a second pole piece having a holding face on which the workpiece is attached, the second pole piece being movable between a first location at which it is spaced apart from the base and a second location at which it comes in contact with the base and being a magnetic substance; a primary permanent magnet disposed between the first pole piece and the second pole piece, one of an N-pole and an S-pole of the primary permanent magnet coming in contact with one of the first pole piece and the second pole piece while the other of the N-pole and the S-pole of the primary permanent magnet being spaced apart from the other of the first pole piece and the second pole piece; at least one coil wound around at least one of the first pole piece and the second pole piece; and a control device controlling current applied to the coil. The control device applies current to the coil to magnetize at least one the first pole piece and the second pole piece to thereby control the second pole piece to be at the first location at the time of holding the workpiece so that the holding face of the second pole piece comes in contact with the workpiece, and the second pole piece to be at the second location at the time of detaching the workpiece so that the holding face of the second pole piece is spaced apart from the workpiece.

The device may further comprise: a third pole piece having a holding face on which the workpiece is attached, the third pole piece being in contact with the base and being a magnetic substance; and an auxiliary permanent magnet disposed between the second pole piece and the third pole piece so that its one pole of the same polarity as that of the primary permanent magnet affecting the second pole piece points to the second pole piece while its other pole points to the third pole piece, the auxiliary permanent magnet coming in contact with one of the second pole piece and the third pole piece and being spaced apart from the other of the second pole piece and the third pole piece. The at least one coil may be wound around at least the second pole piece. The control device may apply current to the coil to magnetize at least the second pole piece to thereby control the second pole piece to be at the first location at the time of holding the workpiece so that the holding face of the second pole piece comes in contact with the workpiece, and the second pole piece to be at the second location at the time of detaching the workpiece so that the holding face of the second pole piece is spaced apart from the workpiece.

The device may further comprise: a third pole piece having a holding face on which the workpiece is attached, the third pole piece facing the second pole piece and being separated therefrom, and the third pole piece configured to move together with the second pole piece and being a magnetic substance; a fourth pole piece having a holding face on which the workpiece is attached, the fourth pole piece being in contact with the base and being a magnetic substance; and an auxiliary permanent magnet disposed between the third pole piece and the fourth pole piece so that its one pole of the same polarity as that of the primary permanent magnet affecting the second pole piece points to the third pole piece while its other pole points to the fourth pole piece, the auxiliary permanent magnet coming in contact with one of the third pole piece and the fourth pole piece and being spaced apart from the other of the third pole piece and the fourth pole piece. The at least one coil may be wound around both of the second pole piece and the third pole piece. The control device may apply current to the coil to magnetize at least the second pole piece and the third pole piece to thereby control the second pole piece and the third pole piece to be at the first location at the time of holding the workpiece so that the holding faces of the second pole piece and the third pole piece come in contact with the workpiece, and the second pole piece and the third pole piece to be at the second location at the time of detaching the workpiece so that the holding faces of the second pole piece and the third pole piece are spaced apart from the workpiece.

The device may further comprise: a yoke having an accommodation space therein and an opening, the yoke being a magnetic substance; a first auxiliary permanent magnet disposed between the first pole piece and the yoke so that its one pole of the same polarity as that of the primary permanent magnet affecting the first pole piece points to the first pole piece while its other pole points to the yoke; and a second auxiliary permanent magnet disposed between the second pole piece and the yoke so that its one pole of the same polarity as that of the primary permanent magnet affecting the second pole piece points to the second pole piece while its other pole points to the yoke, the second auxiliary permanent magnet coming in contact with one of the second pole piece and the yoke and being spaced apart from the other of the second pole piece and the yoke. At least a part of each of the base, the first pole piece and the second pole piece may be accommodated in the accommodation space of the yoke while being spaced apart from the yoke. The holding faces of the first pole piece and the second pole piece may be exposed to the outside through the opening.

The device may further comprise: a third pole piece being in contact with the base, the third pole piece being a magnetic substance; a fourth pole piece being in contact with the base, the fourth pole piece being a magnetic substance; a first auxiliary permanent magnet disposed between the first pole piece and the third pole piece so that its one pole of the same polarity as that of the primary permanent magnet affecting the first pole piece points to the first pole piece while its other pole points to the third pole piece; and an second auxiliary permanent magnet disposed between the second pole piece and the fourth pole piece so that its one pole of the same polarity as that of the primary permanent magnet affecting the second pole piece points to the second pole piece while its other pole points to the fourth pole piece, the auxiliary permanent magnet coming in contact with one of the second pole piece and the fourth pole piece and being spaced apart from the other of the fourth pole piece and the second pole piece.

The coil may be wound around the second pole piece and may be disposed between the primary permanent magnet and the holding face of the second pole piece.

A flow-promoting portion may be formed near a region where the first pole piece meets the base or a region where the second pole piece meets the base so that a shortest one of magnetic flux paths induced by the primary permanent magnet and passing though the base when the second pole piece is at the second position is not bent at a right angle.

The base may have chamfered or filleted corners for conforming to the magnetic flux paths induced by the primary permanent magnet and passing though the base when the second pole piece is at the second position.

An area of the holding face of the first pole piece may be smaller than an average of the cross-sectional area of the portion where the primary permanent magnet faces the first pole piece, and an area of the holding face of the second pole piece may be smaller than an average of the cross-sectional area of the portion where the primary permanent magnet faces the second pole piece.

The second pole piece may be in a plate-like shape having a relatively large first face and a second face, the primary permanent magnet may come in the first face and the coil is wound around between the primary permanent magnet and the holding face, when the second pole piece is disposed such that the upper face of the second pole piece comes in contact with the base and the lower face thereof corresponds to the holding face, from a point of view perpendicular to the first face, a horizontal width of the portion where the coil is wound may be smaller than a horizontal width of the face in contact with the base, and a horizontal width of the holding face may be equal to or smaller than the horizontal width of the portion where the coil is wound.

An average of cross-sectional areas of the base in a longitudinal direction may be larger than an average of cross-sectional area of the portion where the primary permanent magnet meets the first pole piece, and larger than an average of the cross-sectional area of the portion where the primary permanent magnet meets the second pole piece.

The primary permanent magnet may be in contact with the second pole piece and spaced apart from the first pole piece.

The second pole piece may be configured to move between the first location and the second location by 0.3 mm to 1.2 mm.

According to the magnetic substance holding device of the present invention, residual magnetism when a workpiece has been detached therefrom can be minimized. In addition, by disposing coils around pole pieces instead of an additional electromagnet, strong holding force can be obtained in a simple structure, magnetic force from a permanent magnet can be controlled with small current at the time of switching between holding and detaching, and strong holding force can be obtained in a smaller space.

### BRIEF DESCRIPTION OF THE DRAWINGS

The above and other aspects, features and other advantages of the present invention will be more clearly understood from the following detailed description taken in conjunction with the accompanying drawings, in which:
FIGS. 1A and 1B are schematic cross-sectional views of a magnetic substance holding device according to an exemplary embodiment of the present invention;
FIG. 2 is an enlarged, schematic cross-sectional view of a connection part between the base and the second pole piece of the magnetic substance holding device shown in FIG. 1A;
FIG. 3 is a side cross-sectional view of the base shown in FIG. 1A;
FIGS. 4A and 4B are schematic cross-sectional views of a magnetic substance holding device according to another exemplary embodiment of the present invention;
FIGS. 5A and 5B are schematic cross-sectional views of a magnetic substance holding device according to yet another exemplary embodiment of the present invention;
FIGS. 6A and 6B are schematic cross-sectional views of a magnetic substance holding device according to still another exemplary embodiment of the present invention; and
FIGS. 7A and 7B are schematic cross-sectional views of a magnetic substance holding device according to yet another exemplary embodiment of the present invention.

### DETAILED DESCRIPTION OF THE PREFERRED EMBODIMENT

Advantages and features of the present invention and methods to achieve them will become apparent from the descriptions of exemplary embodiments herein below with reference to the accompanying drawings. However, the present invention is not limited to exemplary embodiments disclosed herein but may be implemented in various different ways. The exemplary embodiments are provided for making the disclosure of the present invention thorough and for fully conveying the scope of the present invention to those skilled in the art. It is to be noted that the scope of the present invention is defined only by the claims.

As used herein, a phrase "an element A on an element B" refers to that the element A may be disposed directly on the element B and/or the element A may be disposed indirectly on the element B via another element C.

Although terms such as first, second, etc. are used to distinguish arbitrarily between the elements such terms describe and these terms are not necessarily intended to indicate temporal or other prioritization of such elements. These terms are used to merely distinguish one element from another. Accordingly, as used herein, a first element may be a second element within the technical scope of the present invention.

Like reference numerals denote like elements throughout the descriptions.

The drawings are not to scale and the relative dimensions of various elements in the drawings are depicted schematically and not necessarily to scale.

Features of various exemplary embodiments of the present invention may be combined partially or totally. As will be clearly appreciated by those skilled in the art, technically various interactions and operations are possible. Various exemplary embodiments can be practiced individually or in combination.

Hereinafter, magnetic substance holding devices according to exemplary embodiments of the present invention will be described with reference to the accompanying drawings.

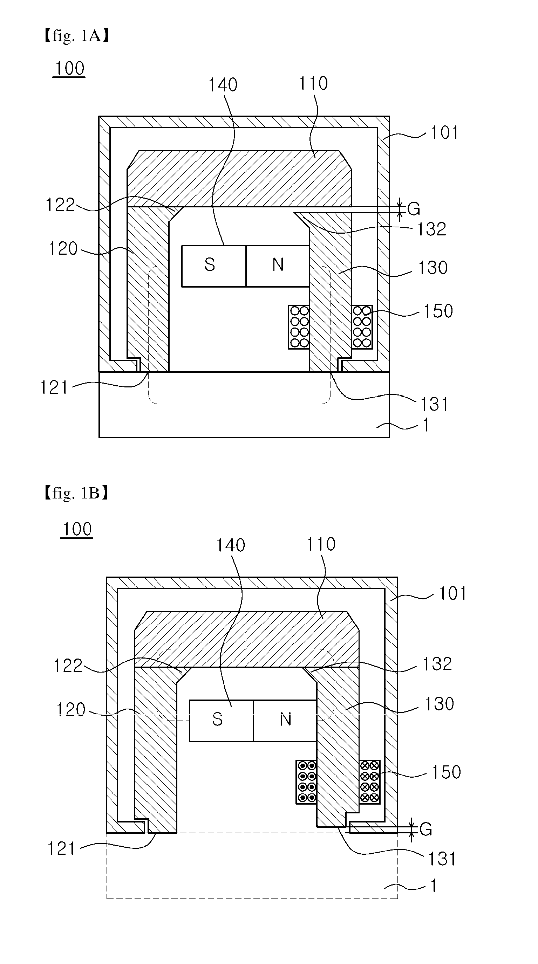

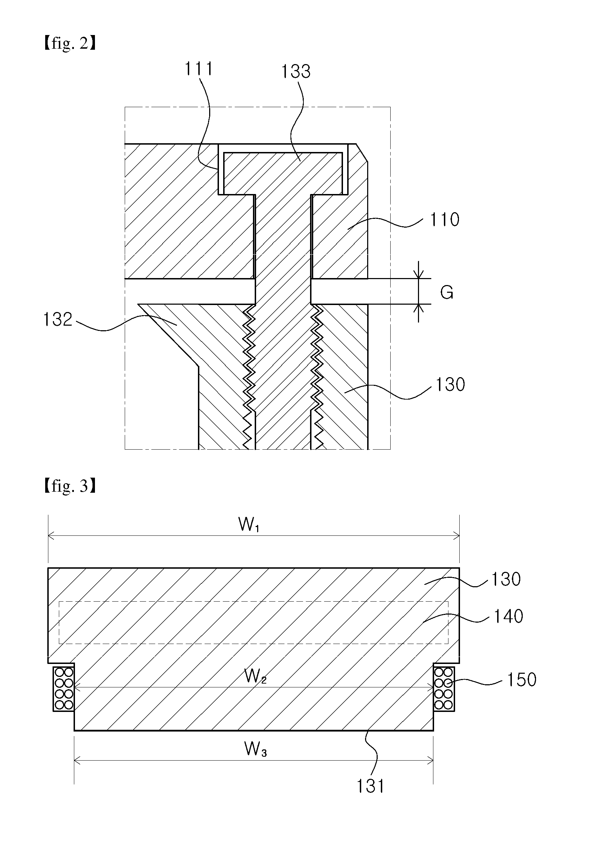

FIGS. 1A and 1B are schematic cross-sectional views of a magnetic substance holding device according to an exemplary embodiment of the present invention. Specifically, FIG. 1A is a schematic cross-sectional view of the magnetic substance holding device when it holds a workpiece, whereas FIG. 1B is a schematic cross-sectional view of the magnetic substance holding device when a workpiece is detached therefrom. FIG. 2 is an enlarged, schematic cross-sectional view of a connection part between a base and a second pole piece of the magnetic substance holding device shown in FIG. 1A. FIG. 3 is a side cross-sectional view of the base shown in FIG. 1A.

A configuration of a magnetic substance holding device 100 according to an exemplary embodiment of the present invention will be described with reference to FIGS. 1A, 1B, 2 and 3.

Referring to FIGS. 1A and 1B, a magnetic substance holding device 100 according to an exemplary embodiment includes a base 110, a first pole piece 120, a second pole piece 130, a primary permanent magnet 140, a coil 150, and a control device (not shown) .

The base 110 is made of a magnetic substance and acts as a bridge for a magnetic flux between the first pole piece 120 and the second pole piece 130. The base 110 may be surrounded by a case 101 made of a paramagnetic substance, such as aluminum, and may be fixed therein.

The first pole piece 120 has a holding face 121 on which a workpiece 1, which is a magnetic substance, is to be attached. The first pole piece 120 is made of a magnetic substance. The first pole piece 120 comes in contact with the base 110 and is fixed thereto.

The second pole piece 130 has a holding face 131 on which a workpiece 1, which is a magnetic substance, is to be attached. The second pole piece 130 is made of a magnetic substance. The second pole piece 130 is movable between a first location at which it is spaced apart from the base 110 (i.e., the location of the second pole piece 130 in FIG. 1A) and a second location at which it is in contact with the base 110 (i.e., the location of the second pole piece 130 in FIG. 1B). In other words, the second pole piece 130 is movably connected to the base 110.

Referring to FIG. 2, an example of connection between the base 110 and the second pole piece 130 will be described. The base 110 has a counter bore 111 formed therein. A bolt 133 is threaded into the second pole piece 130. FIG. 2 shows the second pole piece 130 at the first location, in which there is a gap G between the second pole piece 130 and the base 110. The head of the bolt 133 is held on the bottom portion of the counter bore 111 so that the gap G is maintained at the first location. The gap G can be adjusted by adjusting the degree of insertion of the bolt 133. The bolt 133 is preferably made of a paramagnetic substance that does not generate a magnetic flux, such as aluminum.

It is to be understood that the connection manner between the second pole piece 130 and the base 110 is not limited by that shown in FIG. 2, and other connection manners can be practiced. For example, the second pole piece 130 may be slidable along separate rails. Further, for example, the second pole piece 130 may move along at least one pin penetrating the second pole piece 130 and the base 110. Needless to say, various mechanisms to move the second pole piece can be selected and applicable.

If the gap G is too small, force caused by residual magnetism affects the workpiece 1. If the gap G is too large, current applied to the coil 150 for moving the second pole piece 130 has to be increased. Accordingly, the gap may be determined in an appropriate range. Based on results from experiments, the gap G is preferably from 0.3 mm to 1.2 mm, more preferably 0.5 mm. However, it may be 0. 1 mm, 0.2 mm, or 1.3 mm or greater.

The primary permanent magnet 140 is interposed between the first pole piece 120 and the second pole piece 130 to generate a magnetic flux. The N-pole or the S-pole of the primary permanent magnet 140 may come in contact with the first pole piece 120 or the second pole piece 130, while the S-pole or the N-pole of the primary permanent magnet 140 may come in contact with the second pole piece 120 or the first pole piece 130. In this exemplary embodiment, the N-pole of the primary permanent magnet 140 comes in contact with the second pole piece 130 and the S-pole thereof is spaced apart from the first pole piece 120. Any of ordinary permanent magnets commercially available on the market may be used for the primary permanent magnet 140. The number, shape or the like of the primary permanent magnet 140 may be changed as required, as long as it is interposed between the first pole piece 120 and the second pole piece 130.

The primary permanent magnet 140 is spaced apart from the first pole piece 120 by a separation distance, which may be determined as desired within the range that the magnetic force of the S-pole reaches. To obtain strong holding force, it is preferably to place the primary permanent magnet 140 as close to the first pole piece 120 as possible. For example, the separation distance may be 0.1 mm, 0.2 mm, 0.3 mm, 0.4 mm, 0.5 mm, or 1 mm or greater. Further, the primary permanent magnet 140 may be almost in contact with the first pole piece 120. By separating the permanent magnet 140 from the first pole piece 120, the second pole piece 130 may move more freely.

The coil 150 may be wound around at least one of the first pole piece 120 and the second pole piece 130. In this exemplary embodiment, the coil 150 is wound around the second pole piece 130. However, this is merely illustrative, and the coil 150 may be wound around the first pole piece 120 only or coils may be wound around first pole piece 120 and the second pole piece 130. In addition, the coil 150 may be wound around a pole piece at a position higher or lower than the primary permanent magnet 140.

Preferably, the coil 150 is disposed between the primary permanent magnet 140 and the holding face 131 of the second pole piece 130, as shown in FIGS. 1A and 1B, in order to control a magnetic flux more effectively.

The control device (not shown) controls current applied to the coil 150 to thereby control holding and detaching operations of the magnetic substance holding device 100 according to this exemplary embodiment.

Hereinafter, the principle will be described that the magnetic substance holding device 100 thus configured holds and detaches a workpiece 1, which is a magnetic substance.

Referring to FIG. 1A, a workpiece 1 is attached on the holding faces 121 and 131 of the first pole piece 120 and the second pole piece 130, with no current applied to the coil 150. The primary permanent magnet 140 magnetizes the first pole piece 120 and the second pole piece 130, and thus attractive force acts between the first pole piece 120 and the work piece 1 and between the second pole piece 130 and the workpiece 1. As a result, the workpiece 1 is attached on the holding faces 121 and 131 and thus a magnetic flux indicated by the dashed line is created. Accordingly, the workpiece 1 is firmly attached on the magnetic substance holding device 100.

When this happens, the second pole piece 130 is at the first location. Namely, the second pole piece 130 is spaced apart from the base 110 by the gap G, and the holding face 121 of the first pole piece 120, the holding face 131 of the second pole piece 130, and the workpiece 1 form a plane.

Holding force can be enhanced by applying more current to the coil 150 so that the N-pole is created on the lower side of FIG. 1A. As such, by applying more current to the coil 150, the second pole piece 130 is magnetized by electromagnetic induction as if it were an electromagnet, so that stronger magnetic force can be obtained.

Now, referring to FIG. 1B, detaching the workpiece 1 from the magnetic substance holding device 100 will be described.

As shown in FIG. 1B, when the control device applies current to the coil 150 so that an N-pole is created close to the primary permanent magnet 140, the magnetic flux which was flowing through the workpiece 1 is disconnected, and the second pole piece 130 attracts the base 110. Accordingly, the second pole piece 130 moves toward the base 110 and attaches thereto, so that a magnetic flux is created as indicated by the dashed line in FIG. 1B. Namely, the second pole piece 130 is attached to the base 110, so that a magnetic flux is created passing through the primary permanent magnet 140, the second pole piece 130, the base 110, the first pole piece 120, and the primary permanent magnet 140. Further, the coil 150 induces a magnetic flux of the permanent magnet 140 toward the base 110 other than the workpiece 1, so that no magnetic flux flows through the workpiece 1.

Consequently, the workpiece 1 can be detached from the holding face 121 of the first pole piece 120 and the holding face 131 of the second pole piece 130. Then, the second pole piece 130 does not return to the first location even if applying of the current to the coil 150 is interrupted. Accordingly, the magnetic flux flow passing through the base 110 is maintained, so that the workpiece 1 cannot be attached on the holding faces 121 and 131.

In addition, when the workpiece 1 is detached from the magnetic substance holding device 100, the second pole piece 130 is attached to the base 110. Accordingly, there is formed the gap G between the workpiece 1 and the holding face 131 of the second pole piece 130. Thanks to the gap, residual magnetism in the magnetic substance holding device 100 can be effectively blocked.

To hold the workpiece 1 again, current in the direction opposite to that indicated in FIG. 1B is applied to the coil 150, and the second pole piece 130 is attached to the workpiece 1 to thereby create the magnetic flux flow as shown in FIG. 1A. As will be appreciated, once the magnetic flux flow as shown in FIG. 1A is created, the work piece 1 is kept being held even if current to the coil 150 is interrupted.

To block residual magnetism more effectively, flow-promoting portions 122 and 132 may be formed. The flow-promoting portions 122 and 132 is to avoid that when the second pole piece 130 is at the second location shown in FIG. 1B, the shortest one of magnetic flux paths induced by the primary permanent magnet 140 and passing through the base 110 is bent at a right angle. The flow-promoting portions 122 and 132 include a first flow-promoting portion 122 formed near the area where the first pole piece 120 meets the base 110, and a second flow-promoting portion 132 formed near the area where the second pole piece 130 meets the base 110. The shortest magnetic flux path in FIG. 1B refers to a path along the inner peripheral surface of each of the base 110, the first pole piece 120, the second pole piece 130 and the primary permanent magnet 140. If the first pole piece 120 meets the base 110 at a right angle, and the second pole piece 130 meets the base 110 at a right angle, the shortest magnetic flux path is bent at a right angle, so that the magnetic flux flow is disturbed. In contrast, with the flow-promoting portions 122 and 132, the length of the magnetic flux paths become shorter and the width thereof becomes larger, so that the reluctance to the magnetic flux flow is reduced. As a result, the magnetic flux flow toward the base 110 is promoted, whereas the magnetic flux flow toward the workpiece 1 is suppressed while the workpiece is detached as shown in FIG. 1B. As a result, residual magnetism can be reduced.

Although the flow-promoting portions 122 and 132 are formed as parts of the first pole piece 120 and the second pole piece 130, respectively, in this exemplary embodiment, the flow-promoting portions 122 and 132 may be formed as parts of the base 110. Further, although the inner peripheral surfaces of the flow-promoting portions 122 and 132 have straight surfaces in this exemplary embodiment, it is more preferable that the inner peripheral surfaces may have curved surfaces conforming to the magnetic flux flow.

Another way to further reduce residual magnetism is to have the corners of the base 110 chamfered or filleted as shown in FIGS. 1A and 1B. At a right-angle corner which is neither chamfered nor filleted, magnetic eddy current may occur when the magnetic flux flow is created as shown in FIG. 1B. This works as reluctance to the magnetic flux flow or adversely affects the efficiency. In contrast, with the chamfered or filleted corners as shown in FIGS. 1A and 1B, such magnetic eddy current does not occur and thus reluctance to the magnetic flux flow can be further reduced. Therefore, by chamfering or filleting the corners of the base 110 so that the magnetic field flows along the path shown in FIG.1B, residual magnetism can be further reduced.

Another way to further reduce residual magnetism will be described with reference to FIG. 3. FIG. 3 is a side cross-sectional view of the second pole piece 130, relative to the front view shown in FIG. 1A.

The second pole piece 130 may have the front shape shown in FIGS. 1A and 1B and have an elongated plate-like shape shown in FIG. 3. Namely, the second pole piece 130 may have a plate-like shape having a relatively large first face and a second face opposed to the first face. When the second pole piece 130 is viewed from a view point perpendicular to the first or second face as shown in FIG. 3, the upper face of the second pole piece 130 comes in contact with the base 110 and the lower face thereof corresponds to the holding face 131. In this instance, for reducing residual magnetism, as shown in FIG. 3, the horizontal width W₁ of the upper face to be in contact with the base 110 is preferably larger than the horizontal width W₂ of the portion around which the coil 150 is wound. In addition, the horizontal width W₃ of the holding face 131 is preferably equal to or smaller than the width W₂. This is because, with the relationship W₁ > W₂ ≥ W₃, the reluctance to the magnetic flux flow toward the base 110 becomes smaller and accordingly residual magnetism is reduced. In addition, by having right-angle corners on both sides in the middle portion as shown in FIG. 3, eddy current occurs in the magnetic flux flowing downwardly, so that reluctance thereto becomes relatively large. Consequently, with the second pole piece 130 having the shape shown in FIG. 3, residual magnetism can be further reduced.

Another way to further reduce residual magnetism is to make the area of the holding face 121 of the first pole piece 120 smaller than the average of the cross-sectional area of the portion where the primary permanent magnet 140 meets the first pole piece 120. (i.e., the average of the cross-sectional areas of the first pole piece taken from the lower side to the upper side in FIG. 1A) Likewise, the area of the holding face 131 of the second pole piece 130 is made smaller than the average of the cross-sectional areas where the primary permanent magnet 140 meets the second pole piece 130. With this configuration, magnetic reluctance in the path from the portion where the magnetic flux flow is generated (where the primary permanent magnet 140 meets the pole pieces) to the holding faces 121 and 131 is increased so that residual magnetism does not flow toward the holding faces 121 and 131. As a result, residual magnetism is suppressed.

In order not to overly restrict holding force, as shown in FIGS. 1A and 1B, it is preferable to make the inner peripheral surfaces of the first pole piece 120 and the second pole piece 130 straight surfaces while making steps on the outer peripheral surfaces thereof.

Another way to further reduce residual magnetism is to make the average cross-sectional area of the base 110 in the longitudinal direction larger than the average cross-sectional area where the primary permanent magnet 140 meets the first pole piece 120, and larger than the average cross-sectional area where the primary permanent magnet 140 meets the second pole piece 130. Namely, in FIGS. 1A and 1B, by making the base 110 thicker than the portions where the first pole piece 120 and the second pole piece 130 meet the primary permanent magnet 140 to reduce reluctance to the magnetic flux flow toward the base 110, residual magnetism toward the lower side can be suppressed.

In addition to the suppression of the residual magnetism by the gap G with the movement of the second pole piece 130, by combining the above-described configurations for suppressing residual magnetism, residual magnetism in the magnetic substance holding device 100 can be drastically reduced.

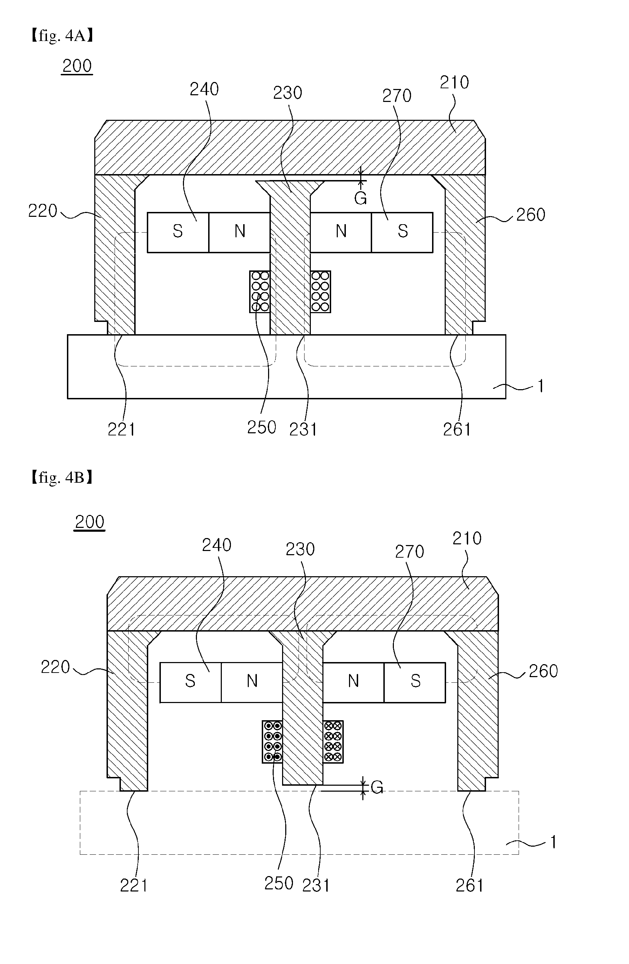

FIGS. 4A and 4B are schematic cross-sectional views of a magnetic substance holding device according to another exemplary embodiment of the present invention. Specifically, FIG. 4A is a schematic cross-sectional view of the magnetic substance holding device when it holds a workpiece, whereas FIG. 4B is a schematic cross-sectional view of the magnetic substance holding device when a workpiece is detached therefrom.

Referring to FIGS. 4A and 4B, a magnetic substance holding device 200 according to this exemplary embodiment includes a base 210, a first pole piece 220, a second pole piece 230, a primary permanent magnetic 240, a coil 250, a third pole piece 260, an auxiliary permanent magnet 270, and a control device (not shown).

The magnetic substance holding device 200 according to this exemplary embodiment employs basically the same operating principle as that of the magnetic substance holding device 100 shown in FIGS. 1A and 1B; and, therefore, descriptions will be made focusing on the differences.

The magnetic substance holding device 200 according to this exemplary embodiment further includes the third pole piece 260 and the auxiliary permanent magnet 270 in addition to the elements included in the magnetic substance holding device 100 shown in FIGS. 1A and 1B. Further, the base 210 is extended relative to the base 110 to attach the third pole piece 260 thereon. Other elements, such as the first pole piece 220, the second pole piece 230, the primary permanent magnet 240 and the coil 250 are identical to the first pole piece 120, the second pole piece 130, the primary permanent magnet 140 and the coil 150 shown in FIGS. 1A and 1B, respectively.

The base 210 is extended so that the third pole piece 260 can come in contact therewith. The third pole piece 260 comes in contact with the base 210 together with the first pole piece 220 and has a holding face 261 on which a workpiece 1 is to be attached.

The auxiliary permanent magnet 270 is disposed between the second pole piece 230 and the third pole piece 260 so that its N-pole, which is the same polarity as the polarity of the primary permanent magnet 240 affecting the second pole piece 230, points to the second pole piece 230 whereas its S-pole points to the third pole-piece 260. Additionally, the auxiliary permanent magnet 270 comes in contact with the second pole piece 230 or the third pole piece 260 and is spaced apart from the third pole piece 260 or the second pole piece 230. In this exemplary embodiment, the N-pole of the auxiliary permanent magnet 270 comes in contact with the second pole piece 230.

In this exemplary embodiment, the coil 250 is wound around the second pole piece 230. In addition to this, coils may be wound around at least one of the first pole piece 220 and the third pole piece 260.

The ways of applying current at the time of holding and detaching, or additional ways to reduce residual magnetism are identical to those described above with respect to the exemplary embodiment in FIGS. 1A and 1B; and, therefore, the redundant descriptions will be omitted.

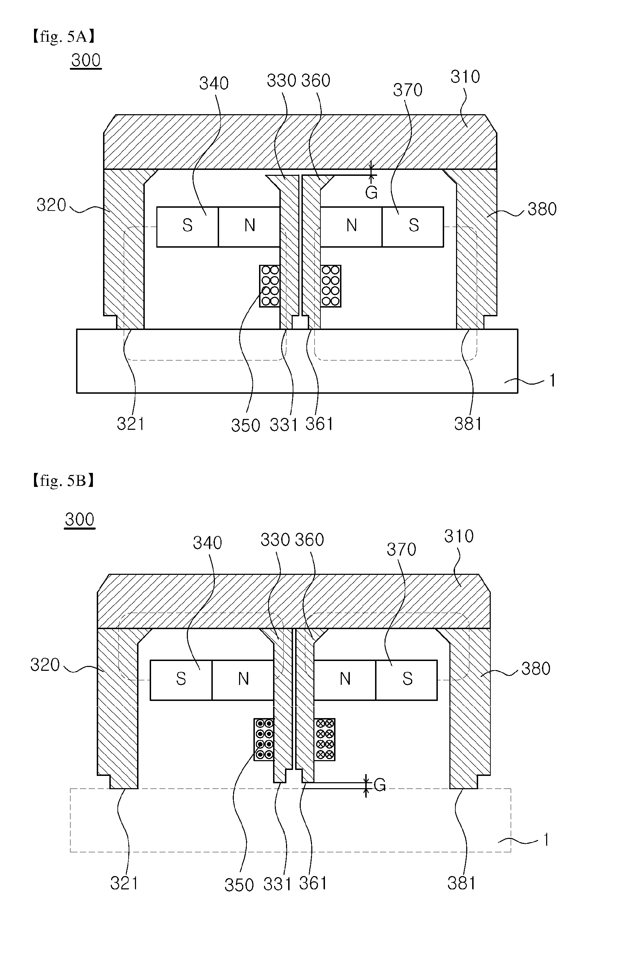

FIGS. 5A and 5B are schematic cross-sectional views of a magnetic substance holding device according to yet another exemplary embodiment of the present invention. Specifically, FIG. 5A is a schematic cross-sectional view of the magnetic substance holding device when it holds a workpiece, whereas FIG. 5B is a schematic cross-sectional view of the magnetic substance holding device when a workpiece is detached therefrom.

Referring to FIGS. 5A and 5B, a magnetic substance holding device 300 according to this exemplary embodiment includes a base 310, a first pole piece 320, a second pole piece 330, a primary permanent magnetic 340, a coil 350, a third pole piece 360, an auxiliary permanent magnet 370, a fourth pole piece and a control device (not shown).

The magnetic substance holding device 300 according to this exemplary embodiment employs basically the same operating principle as that of the magnetic substance holding device 100 shown in FIGS. 1A and 1B; and, therefore, descriptions will be made focusing on the differences.

The magnetic substance holding device 300 according to this exemplary embodiment further includes the third pole piece 360, the auxiliary permanent magnet 370 and the fourth pole piece 380 in addition to the elements included in the magnetic substance holding device 100 shown in FIGS. 1A and 1B. Further, the base 310 is extended relative to the base 110 to attach the third pole piece 360 and the fourth pole piece 380 thereon. Other elements, such as the first pole piece 320, the second pole piece 330, the primary permanent magnet 340 and the coil 350 are identical to the first pole piece 120, the second pole piece 130, the primary permanent magnet 140 and the coil 150 shown in FIGS. 1A and 1B, respectively.

The base 310 is extended so that the third pole piece 360 and the fourth pole piece 370 can come in contact therewith.

The third pole piece 360, which is a magnetic substance, has a holding face 361 on which a workpiece 1 is to be attached. Further, the third pole piece 360 is spaced apart from the second pole piece 330 facing each other, and moves together with the second pole piece 330.

The fourth pole piece 380 comes in contact with the base 310 together with the first pole piece 320 and has a holding face 381 on which a workpiece 1 is to be attached.

The auxiliary permanent magnet 370 is disposed between the third pole piece 360 and the fourth pole piece 380 so that its N-pole, which is the same polarity as the polarity of the primary permanent magnet 340 affecting the second pole piece 360, points to the second pole piece 360 whereas its S-pole points to the third pole-piece 380. Additionally, the auxiliary permanent magnet 370 comes in contact with the third pole piece 360 or the fourth pole piece 380 and is spaced apart from the fourth pole piece 380 or the third pole piece 360. In this exemplary embodiment, the N-pole of the auxiliary permanent magnet 270 comes in contact with the third pole piece 360.

Although the coil 350 is wound around the second pole piece 330 and the third pole piece 360, coils may be wound around at least one of the first pole piece 320 and the fourth pole piece 380.

The ways of applying current at the time of holding and detaching, or additional ways to reduce residual magnetism are identical to those described above with respect to the exemplary embodiment in FIGS. 1A and 1B; and, therefore, the redundant descriptions will be omitted.

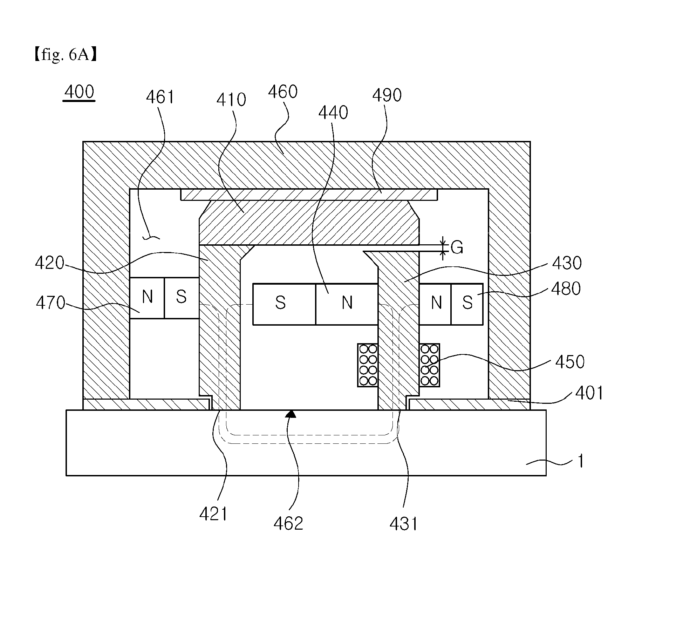

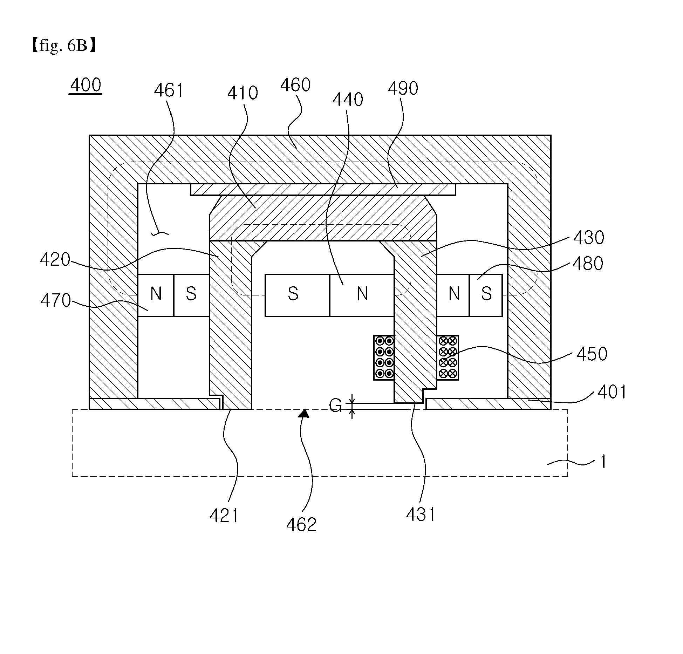

FIGS. 6A and 6B are schematic cross-sectional views of a magnetic substance holding device according to yet another exemplary embodiment of the present invention. Specifically, FIG. 6A is a schematic cross-sectional view of the magnetic substance holding device when it holds a workpiece, whereas FIG. 6B is a schematic cross-sectional view of the magnetic substance holding device when a workpiece is detached therefrom.

Referring to FIGS. 6A and 6B, a magnetic substance holding device 400 according to this exemplary embodiment includes a base 410, a first pole piece 420, a second pole piece 430, a primary permanent magnetic 440, a coil 450, a yoke 460, a first auxiliary permanent magnet 470, a second auxiliary permanent magnet 480, a shield member 490 and a control device (not shown).

The magnetic substance holding device 400 according to this exemplary embodiment employs basically the same operating principle as that of the magnetic substance holding device 100 shown in FIGS. 1A and 1B; and, therefore, descriptions will be made focusing on the differences.

The magnetic substance holding device 400 according to this exemplary embodiment further includes the yoke 460, the first auxiliary permanent magnet 470, the second auxiliary permanent magnet 480 and the shield member 490, in addition to the elements included in the magnetic substance holding device 100 shown in FIGS. 1A and 1B. Other elements, such as the first pole piece 420, the second pole piece 430, the primary permanent magnet 440 and the coil 450 are identical to the first pole piece 120, the second pole piece 130, the primary permanent magnet 140 and the coil 150 shown in FIGS. 1A and 1B, respectively.

The yoke 460 has an accommodation space 461 and an opening 462, and made of a magnetic substance. In the accommodation space 461, at least the base 410 is accommodated. The yoke 460 is spaced apart from the base 410, the first pole piece 420 and the second pole piece 430.

The first auxiliary permanent magnet 470 is disposed between the first pole piece 420 and the yoke 420 so that its S-pole, which is the same polarity as the polarity of the primary permanent magnet 440 affecting the first pole piece 420, points to the first pole piece 420 whereas its N-pole points to the yoke 460. The first auxiliary permanent magnet 470 may be disposed to be in contact with both of the first pole piece 420 and the yoke 460.

The second auxiliary permanent magnet 480 is disposed between the second pole piece 430 and the yoke 460 so that its N-pole, which is the same polarity as the polarity of the primary permanent magnet 440 affecting the second pole piece 430, points to the second pole piece 430 whereas its S-pole points to the yoke 460. The second auxiliary permanent magnet 480 may be disposed to be in contact with the second pole piece 430 and spaced apart from the yoke 460.

The shield member 490 in which no magnetic field flows is interposed between the yoke 460 and the base 410. For example, the shield member 490 may be made of a paramagnetic material such as aluminum. In stead of the shield member 490, an air layer may be interposed between the yoke 460 and the base 410.

A holding face 421 of the first pole piece 420 and a holding face 431 of the second pole piece 430 are exposed to the outside through the opening 462 of the yoke 460.

The yoke 460 may also work as a case of the magnetic substance holding device 400. Additionally, by employing the first auxiliary permanent magnetic 470 and the second auxiliary permanent magnetic 480, stronger holding force can be obtained. Further, by employing the yoke 460, residual magnetism can be reduced more effectively. Specifically, referring to FIG. 6, by employing the yoke 460, the magnetic flux flow is guided toward the yoke 460, so that a second magnetic flux flow indicated by the dashed line is created. As a result, residual magnetism can be more effectively prevented.

A cover 401 made of a paramagnetic material such as aluminum may be further provided so as to cover the opening 462 of the yoke 460 and to expose the holding faces 421 and 431.

The ways of applying current at the time of holding and detaching, or additional ways to reduce residual magnetism are identical to those described above with respect to the exemplary embodiment in FIGS. 1A and 1B; and, therefore, the redundant descriptions will be omitted.

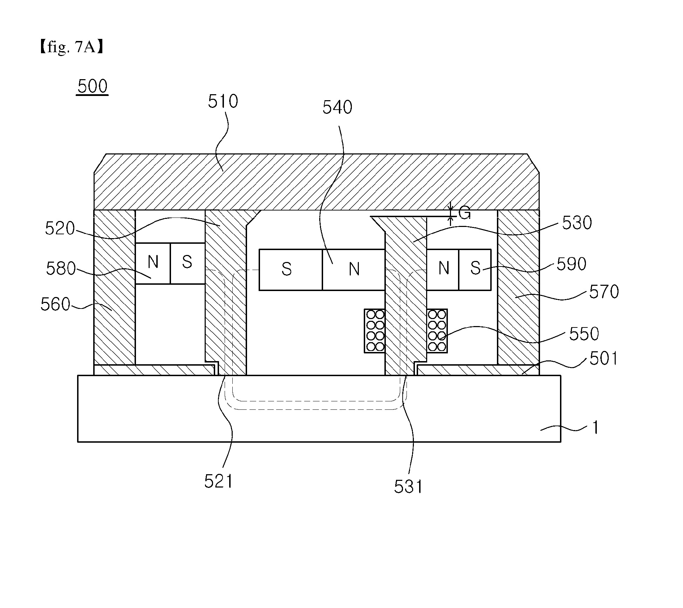

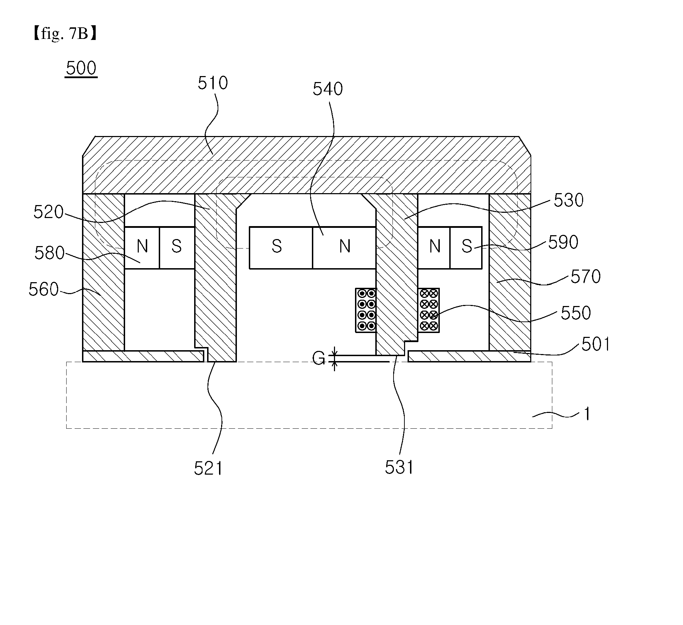

FIGS. 7A and 7B are schematic cross-sectional views of a magnetic substance holding device according to still another exemplary embodiment of the present invention. Specifically, FIG. 7A is a schematic cross-sectional view of the magnetic substance holding device when it holds a workpiece, whereas FIG. 7B is a schematic cross-sectional view of the magnetic substance holding device when a workpiece is detached therefrom.

Referring to FIGS. 7A and 7B, a magnetic substance holding device 500 according to this exemplary embodiment includes a base 510, a first pole piece 520, a second pole piece 530, a primary permanent magnetic 540, a coil 550, a third pole piece 560, a fourth pole piece 570, a first auxiliary permanent magnet 580, a second auxiliary permanent magnet 590 and a control device (not shown).

The magnetic substance holding device 500 according to this exemplary embodiment employs basically the same operating principle as that of the magnetic substance holding device 100 shown in FIGS. 1A and 1B; and, therefore, descriptions will be made focusing on the differences.

The magnetic substance holding device 500 according to this exemplary embodiment further includes the third pole piece 560, the fourth pole piece 570, the first auxiliary permanent magnet 580 and the second auxiliary permanent magnet 590. Further, the base 510 is extended relative to the base 110 to attach the third pole piece 560 and the fourth pole piece 570 thereon. Other elements, such as the first pole piece 520, the second pole piece 530, the primary permanent magnet 540 and the coil 550 are identical to the first pole piece 120, the second pole piece 130, the primary permanent magnet 140 and the coil 150 shown in FIGS. 1A and 1B, respectively.

The third pole piece 560 is located on the outer side than the first pole piece 520 and comes in contact with the base 510. In addition, the fourth pole piece 570 is located on the outer side than the second pole piece 530 and comes in contact with the base 510. The third pole piece 560 and the fourth pole piece 570 both are made of magnetic materials.

The first auxiliary permanent magnet 580 is disposed between the first pole piece 520 and the third 560 so that its S-pole, which is the same polarity as the polarity of the primary permanent magnet 540 affecting the first pole piece 520, points to the first pole piece 520 whereas its N-pole points to the third pole piece 560. The first auxiliary permanent magnet 580 is in contact with both of the first pole piece 520 and the third pole piece 560.

The second auxiliary permanent magnet 590 is disposed between the second pole piece 530 and the fourth pole piece 570 so that its N-pole, which is the same polarity as the polarity of the primary permanent magnet 540 affecting the second pole piece 530, points to the second pole piece 530 whereas its S-pole points to the fourth pole piece 570. The second auxiliary permanent magnet 590 comes in contact with the second pole piece 530 or the fourth pole piece 570 and is spaced apart from the fourth pole piece 570 or the second pole piece 530. In this exemplary embodiment, the second auxiliary permanent magnet 590 comes in contact with the second pole piece 530 while it is spaced apart from the fourth pole piece 570.

A cover 501 made of a paramagnetic material such as aluminum may be further provided so as to cover portions which need not to be exposed while exposing the holding faces 521 and 531 to the outside.

The ways of applying current at the time of holding and detaching, or additional ways to reduce residual magnetism are identical to those described above with respect to the exemplary embodiment in FIGS. 1A and 1B; and, therefore, the redundant descriptions will be omitted.

According to the magnetic substance holding devices 100 to 500 of the present invention, residual magnetism can be minimized at the time of detaching a workpiece. Such reduction in residual magnetism is achieved by virtue of the gap G between the second pole pieces 130 to 530 and a workpiece 1, and by minimizing reluctance to the magnetic flux flow toward the bases 110 to 510 thank to the above-described structures (so-called water-flow structures) of the bases 110 to 510, the first pole pieces 120 to 520, the second pole pieces 130 to 530, the third pole pieces 260, 360 and 560, or the fourth pole piece 570.

Hereinafter, the effect of reducing residual magnetism by the magnetic substance holding devices 100 to 500 of the present invention will be described in terms of numerical values. Experiments for measuring actual numerical values were conducted using the above-described magnetic substance holding device 200. The experiments were conducted with a magnetic substance holding device in the first experimental condition, a magnetic substance holding device in the second experimental condition, and a magnetic substance holding device in the third experimental condition. Each of the magnetic substance holding devices has the configuration as described below:

The magnetic substance holding device in the first experimental condition: the magnetic substance holding device 200 in FIG. 4A, with the second pole piece 230 being in contact with the base 210 fixedly. Other structures for minimizing residual magnetism are not employed.

The magnetic substance holding device in the second experimental condition: the magnetic substance holding device 200 in FIG. 4A, with the second pole piece 230 movable, like that of FIG 4A. Other structures for minimizing residual magnetism, however, are not employed.

The magnetic substance holding device in the third experimental condition: the magnetic substance holding device 200 in FIG. 4A, as it is.

With the above three magnetic substance holding devices, residual magnetism when a workpiece was detached therefrom was measured as holding force, as shown in the table below. Note that for all of the three magnetic material holding devices, the ratios of holding force at the time of detaching to holding force at the time of holding were calculated on the assumption that the later is 300 kgf.

**[Table 1]**

| | First Experimental Condition | Second Experimental Condition | Third Experimental Condition |
|---|---|---|---|
| Holding Force (kgf) at The Time of Detaching | 24-60 | 3.6-4.5 | 0∼1.5 |
| Ratio of Holding Force at the Time of Detaching to Holding Force at the Time of Holding (%) | 8-20 | 1.2-1.5 | 0∼0.5 |

As can be seen from Table 1, compared to the first experimental condition, in the second experimental condition with the gap between the base 210 and the second pole piece 230, the holding force by residual magnetism is reduced to 1.2% to 1.5% relative to the holding force at the time of holding. It can also be seen that, in the third experimental condition with all of the structures for minimizing reluctance to magnetic flux flow, the holding force by residual magnetism is reduced to 0 % to 0.5% relative to the holding force at the time of holding. Therefore, the magnetic substance holding devices 100 to 500 of the present invention can reduce holding force by residual magnetism to almost zero. Further, as residual magnetism is minimized, more permanent magnets can be disposed, so that holding force at the time of holding can be increased.

Incidentally, for the magnetic substance holding device in the first experimental condition with the second pole piece fixed to the base, if an impact is made on a workpiece when it is attached on the device, a part of magnetic flux flow passing through the workpiece turns toward the base. As a result, there is a problem in that the workpiece is easily detached from the device. On the contrary, in the magnetic substance holding devices 100 to 500 of the present invention, the second pole pieces 130 to 530 are spaced apart from the bases 110 to 510, respectively, by the gap G when a workpiece is attached on the devices. As a result, even if an impact is made on the workpiece, the magnetic flux flow does not easily turn toward the bases 110 to 510. Accordingly, the magnetic substance holding devices 100 to 500 of the present invention can maintain stronger performance than existing holding devices regardless of impacts.

Although the exemplary embodiments of the present invention have been described with reference to the accompanying drawings, those skilled in the art would understand that various modifications and alterations may be made without departing from the technical idea or essential features of the present invention. Therefore, it should be understood that the above-mentioned embodiments are not limiting but illustrative in all aspects.

## Claims

1. A magnetic substance holding device for holding and detaching a workpiece, the workpiece being a magnetic substance, the device **characterized by** comprising:
a base being a magnetic substance;
a first pole piece having a holding face on which the workpiece is attached, the first pole piece being in contact with the base and being a magnetic substance;
a second pole piece having a holding face on which the workpiece is attached, the second pole piece being movable between a first location at which it is spaced apart from the base and a second location at which it comes in contact with the base and being a magnetic substance;
a primary permanent magnet disposed between the first pole piece and the second pole piece, one of an N-pole and an S-pole of the primary permanent magnet coming in contact with one of the first pole piece and the second pole piece while the other of the N-pole and the S-pole of the primary permanent magnet being spaced apart from the other of the first pole piece and the second pole piece;
at least one coil wound around at least one of the first pole piece and the second pole piece; and
a control device controlling electric current applied to the coil, wherein the control device applies electric current to the coil to magnetize at least one of the first pole piece and the second pole piece to thereby control the second pole piece to be at the first location at the time of holding the workpiece so that the holding face of the second pole piece comes in contact with the workpiece, and the second pole piece to be at the second location at the time of detaching the workpiece so that the holding face of the second pole piece is spaced apart from the workpiece.

2. The device of claim 1, further comprising:
a third pole piece having a holding face on which the workpiece is attached, the third pole piece being in contact with the base and being a magnetic substance; and
an auxiliary permanent magnet disposed between the second pole piece and the third pole piece so that its one pole of the same polarity as that of the primary permanent magnet affecting the second pole piece points to the second pole piece while its other pole points to the third pole piece, the auxiliary permanent magnet being in contact with one of the second pole piece and the third pole piece and being spaced apart from the other of the second pole piece or the third pole piece,
wherein the at least one coil is wound around at least the second pole piece, and
wherein the control device applies electric current to the coil to magnetize at least the second pole piece to thereby control the second pole piece to be at the first location at the time of holding the workpiece so that the holding face of the second pole piece comes in contact with the workpiece, and the second pole piece to be at the second location at the time of detaching the workpiece so that the holding face of the second pole piece is spaced apart from the workpiece.

3. The device of claim 1, further comprising:
a third pole piece having a holding face on which the workpiece is attached, the third pole piece facing the second pole piece and being spaced apart therefrom, and the third pole piece configured to move together with the second pole piece and being a magnetic substance;
a fourth pole piece having a holding face on which the workpiece is attached, the fourth pole piece being in contact with the base and being a magnetic substance; and
an auxiliary permanent magnet disposed between the third pole piece and the fourth pole piece so that its one pole of the same polarity as that of the primary permanent magnet affecting the second pole piece points to the third pole piece while its other pole points to the fourth pole piece, the auxiliary permanent magnet coming in contact with one of the third pole piece and the fourth pole piece and being spaced apart from the other of the third pole piece and the fourth pole piece,
wherein the at least one coil is wound around together at least the second pole piece and the third pole piece, and
wherein the control device applies electric current to the coil to magnetize at least the second pole piece and the third pole piece to thereby control the second pole piece and the third pole piece to be at the first location at the time of holding the workpiece so that the holding faces of the second pole piece and the third pole piece come in contact with the workpiece, and the second pole piece and the third pole piece to be at the second location at the time of detaching the workpiece so that the holding faces of the second pole piece and the third pole piece are spaced apart from the workpiece.

4. The device of claim 1, further comprising:
a yoke having an accommodation space therein and an opening, the yoke being a magnetic substance;
a first auxiliary permanent magnet disposed between the first pole piece and the yoke so that its one pole of the same polarity as that of the primary permanent magnet affecting the first pole piece points to the first pole piece while its other pole points to the yoke; and
a second auxiliary permanent magnet disposed between the second pole piece and the yoke so that its one pole of the same polarity as that of the primary permanent magnet affecting the second pole piece points to the second pole piece while its other pole points to the yoke, the second auxiliary permanent magnet being in contact with one of the second pole piece and the yoke and being spaced apart from the other of the second pole piece and the yoke,
wherein at least a part of each of the base, the first pole piece and the second pole piece is accommodated in the accommodation space of the yoke while being spaced apart from the yoke, and
wherein the holding faces of the first pole piece and the second pole piece are exposed to the outside through the opening.

5. The device of claim 1, further comprising:
a third pole piece being in contact with the base, the third pole piece being a magnetic substance;
a fourth pole piece being in contact with the base, the fourth pole piece being a magnetic substance;
a first auxiliary permanent magnet disposed between the first pole piece and the third pole piece so that its one pole of the same polarity as that of the primary permanent magnet affecting the first pole piece points to the first pole piece while its other pole points to the third pole piece; and
an second auxiliary permanent magnet disposed between the second pole piece and the fourth pole piece so that its one pole of the same polarity as that of the primary permanent magnet affecting the second pole piece points to the second pole piece while its other pole points to the fourth pole piece, the auxiliary permanent magnet coming in contact with one of the second pole piece and the fourth pole piece and being spaced apart from the other of the second pole piece and the fourth pole piece.

6. The device of any one of claims 1 to 5, wherein the coil is wound around the second pole piece and is disposed between the primary permanent magnet and the holding face of the second pole piece.

7. The device of any one of claims 1 to 5, wherein a flow-promoting portion is formed near a region where the first pole piece meets the base or a region where the second pole piece meets the base so that a shortest one of magnetic flux paths induced by the primary permanent magnet and passing though the base when the second pole piece is at the second position is not bent at a right angle.

8. The device of any one of claims 1 to 5, wherein the base has chamfered or filleted corners for conforming to the magnetic flux paths induced by the primary permanent magnet and passing though the base when the second pole piece is at the second position.

9. The device of any one of claims 1 to 5, wherein an area of the holding face of the first pole piece is smaller than an average of the cross-sectional area of the portion where the primary permanent magnet faces the first pole piece, and
wherein an area of the holding face of the second pole piece is smaller than an average of the cross-sectional area of the portion where the primary permanent magnet faces the second pole piece.

10. The device of any one of claims 1 to 5, wherein the second pole piece is in a plate-like shape having a relatively large first face and a second face,
wherein the primary permanent magnet is attached to the first face and the coil is wound between the primary permanent magnet and the holding face, and
wherein when the second pole piece is disposed such that the upper face of the second pole piece comes in contact with the base and the lower face thereof corresponds to the holding face, from a point of view perpendicular to the first face, a horizontal width of the portion where the coil is wound is smaller than a horizontal width of the face in contact with the base, and a horizontal width of the holding face is equal to or smaller than the horizontal width of the portion where the coil is wound.

11. The device of any one of claims 1 to 5, wherein an average of cross-sectional areas of the base in a longitudinal direction is larger than an average of cross-sectional areas where the primary permanent magnet meets the first pole piece, and larger than an average of the cross-sectional area of the portion where the primary permanent magnet faces the second pole piece.

12. The device of claim 6, wherein the primary permanent magnet comes in contact with the second pole piece and is spaced apart from the first pole piece.

13. The device of any one of claims 1 to 5, wherein the second pole piece is configured to move between the first location and the second location by 0.3 mm to 1.2 mm.
